# EUROPEAN PATENT SPECIFICATION

(11) **EP 3 469 220 B1**
(45) Date of publication and mention of the grant of the patent: **14.02.2024**
(21) Application number: 17810615.9
(22) Date of filing: 08.06.2017
(51) Int. Cl.: F16B 21/00, F16B 5/10, F16B 37/04, F16B 5/02, F16B 21/02, B60R 9/058

(54) **BOLT WITH SAFETY DEVICE FOR A BOLT HEAD AND A METHOD FOR RELEASING THE BOLT**
BOLZEN MIT SICHERHEITSVORRICHTUNG FÜR BOLZENKOPF UND VERFAHREN ZUM LÖSEN DES BOLZENS
BOULON DOTÉ D'UN DISPOSITIF DE SÉCURITÉ POUR UNE TÊTE DE BOULON ET PROCÉDÉ DE LIBÉRATION DU BOULON

(30) Priority: 10.06.2016 NO 20160992
(43) Date of publication of application: 17.04.2019
(73) Proprietor: Egersund Tegneservice OLAV EIK, 4373 Egersund (NO)
(72) Inventor: EIK, Olav, 4373 EGERSUND (NO); EIK, Kjetil, 4034 STAVANGER (NO)
(74) Representative: Håmsø Patentbyrå AS
(86) International application number: PCT/NO2017/050150
(87) International publication number: WO 2017/213519

(56) References cited:
- EP-A1- 0 268 510
- EP-A1- 0 268 510
- EP-A1- 0 713 018
- EP-A2- 0 047 157
- EP-B1- 0 268 510
- WO-A1-03/095270
- WO-A1-03/095270
- DE-A1-102014 206 862
- US-A- 2 479 992
- US-B1- 6 361 042

## Description

This invention relates to a method for releasing the bolt.

A T-bolt and an L-bolt are bolts with transverse bolt heads. In a first direction perpendicular to the longitudinal axis of the bolt, the bolt head has approximately the same width as the diameter of the bolt. In a second direction perpendicular to the longitudinal direction of the bolt and perpendicular to the first direction, the bolt head is substantially longer than the diameter of the bolt. By approximately the same width is meant that the bolt head has a width from half the diameter of the bolt to double the diameter of the bolt. By substantially longer than the diameter of the bolt is meant that the length of the bolt head is equal to or larger than double the diameter of the bolt.

In what follows, such bolts are referred to as T-bolts. However, this is to be understood as the description also applying to an L-bolt if nothing else is specified. Similarly, it will be understood that the description may apply to bolts of other bolt-head designs if nothing else is specified.

T-bolts are used to a considerable extent and maybe the most when the back of the object to which the T-bolt is attached is difficult to access or not accessible.

With known T-bolts, the T-portion of the T-bolt is typically passed through an elongated slot in the object, after which it is rotated around its longitudinal axis so that the T-portion engages with the object. The nut of the T-bolt can then be tightened to clamp the T-portion against the object.

Over time, vibrations and unintended displacement between components that are attached by means of the T-bolt may lead to the T-bolt rotating around its longitudinal axis until the T-portion is aligned with the slot. The T-bolt no longer has a hold then and can be moved out of the slot, which may cause unfortunate consequences. This may happen even if the bolt has been tightened relatively well.

Patent publication WO 03/095270 A1 discloses a mounting for a roof rack. The mounting is preferably attached to a car roof. The mounting comprises a T-bolt and an elastic locking element. The locking element is provided with a central through opening and at least one projecting tongue. The car roof has an elongated, through opening. The length of the opening is identical to or longer than the length of the T-bolt head, and the width of the opening is smaller than the length of the T-bolt head. The T-bolt head is passed through the opening and turned, so that the length of the T-bolt head is perpendicular to the length of the opening. The locking element is slid onto the shank of the T-bolt with the tongue facing the opening and is moved towards the opening until the locking element hits the car roof. The tongue will then project through the opening at the side of the bolt head. The locking element may be provided with two tongues with a distance between them adapted for the width of the bolt head. The tongues of the locking element will prevent the bolt head from turning. A nut is screwed onto the shank of the T-bolt until the nut clamps the elastic locking element against the car roof. It is thereby achieved that the locking element will work as a gasket in the opening. It is also described that a washer may be positioned on the shank of the bolt between the locking element and the nut. On the side facing the locking element, the washer may be provided with a recess adapted for the locking element. The washer will improve the function of the locking element as a seal. In a portion between the bolt head and the shank, the bolt head is shown with a square portion. This is adapted to the width of the opening and will further prevent the bolt from rotating. When the bolt has been tightened with the aid of the nut, the square portion will be positioned in the opening. At its free end, the shank may be provided with a threaded hole. The threaded hole is coaxial with the longitudinal axis of the shank. The roof rack may be secured to the threaded hole. At its free end portion, the shank is provided with two plane faces, one face on either side. The faces make it possible to prevent the bolt from rotating around its longitudinal axis as the nut is being tightened. A tool holds the bolt fixed at the faces while another tool tightens or loosens the nut.

Patent publication US 3171182 discloses a fastener for a plate on a bracket. The fastener comprises a spring-loaded T-bolt. The shank of the T-bolt is positioned together with a surrounding spring inside a housing which also functions as a grip portion for operating the fastener, while the head of the T-bolt projects from one end portion of the housing through a hole in the end-wall portion of the housing. At the end facing the head of the T-bolt, the housing is provided with two projecting tongues. There is a tongue on either side of the T-bolt. The head of the T-bolt is passed through an elongated opening in the plate and a coinciding elongated opening in the bracket. The housing is turned manually so that the head of the T-bolt is placed transversely relative to the longitudinal axis of the opening, while, at the same time, the spring is pulling the head of the T-bolt towards the housing and in between the two tongues. The tongues are positioned in the opening and prevent the head of the T-bolt from turning. The plate is held against the bracket by a force produced by the spring. The shank of the T-bolt is provided with a groove for a screwdriver at its free end portion. The fastener is released by inserting a screwdriver into the housing from the free end of the housing into engagement with the groove. The screwdriver is pressed against the shank so that the spring is pushed together. At the same time, the screwdriver is turned so that the head of the T-bolt is turned and can be moved back through the elongated openings of the plate and bracket.

Patent document US 5370488 also discloses an attachment for connecting two plate-shaped bodies with a T-bolt. The shank of the T-bolt is threaded at its free end portion. The attachment includes a disc provided with two projecting tongues on one side. The disc has been slid onto the shaft of the bolt in such a way that the tongues are facing the head of the T-bolt. A nut has been screwed onto the threaded portion of the shaft and a spring surrounds the shaft between the disc and the nut. The nut is preferably formed with a circular exterior and with knurls on the outer face so that it can easily be operated and tightened by fingers. The head of the T-bolt is provided with grooves in which the tongues are resting while the attachment is moved through openings in the plate-shaped bodies. The attachment is compressed so that the head of the T-bolt is freed from the tongues. Then the T-bolt is turned by the nut being turned and the head of the T-bolt is positioned between the tongues so that the head of the T-bolt can no longer be turned. The head of the T-bolt is placed transversely relative to the longitudinal axis of the openings. The patent document is silent about releasing the attachment from the plate-shaped bodies.

The invention has for its object to remedy or reduce at least one of the drawbacks of the prior art or at least provide a useful alternative to the prior art.

The object is achieved through the features that are specified in the description below and in the claims that follow.

A bolt according to an embodiment not covered by the invention is provided with a safety device which is arranged between a nut and the head portion of the bolt. The safety device includes a locking body which, in its active position, projects through a slot in an object and out on the opposite side of the object. The locking body prevents the head portion, for example a T-shaped bolt head or an L-shaped head, from being rotatable out of its engaged position in the object.

The safety device can be inserted into the slot from one side.

The invention is defined by the independent claims. The dependent claims define advantageous embodiments of the invention.

An embodiment not covered by the invention relates to a compound bolt with a first end portion and a second end portion and a longitudinal axis, in which:
- the bolt is provided with a transverse bolt head at its second end portion;
- the bolt includes a cylindrical portion at its first end portion, with an external thread for a nut with a complementary internal thread;
- the compound bolt includes a safety device arranged between the transverse bolt head and the nut; and
- the safety device is provided, on the side facing the bolt head, with at least one locking body projecting axially,
the transverse bolt head being arranged to be moved through a slot or a through opening in an object, from the front of the object, and then be rotated around the longitudinal axis until the bolt head engages with the object at the back of the object, and the locking body, in an active position, projecting through the slot and out at the back of the object so that the transverse bolt head is prevented from rotating out of its engagement, and the thread of the first end portion of the bolt being provided with a deformation portion so that the internal thread of the nut is non-complementary to the thread in the deformation portion.

In a first direction perpendicular to the longitudinal axis of the bolt, the bolt may have substantially the same width as the external diameter of the bolt and may, in a second direction perpendicular to the longitudinal axis of the bolt, have a substantially longer length than the external diameter of the bolt.

By moving the locking body through the slot and somewhat out on the opposite side, the locking body is prevented from being rotatable out of its locking position even if the T-portion should seek to rotate out of its engaged position and hit the locking body.

The safety device may have an abutment surface which rests against the front of the object when the safety device is in its active position. The safety device is thereby held firmly between the nut and the object, which further ensures that the safety device will stay in its locking position.

The safety device may have several locking bodies which, when the safety device is in its active position, are on separate sides of the transverse bolt head.

The thread of the deformation portion may have a non-circular geometry. By a non-circular geometry is meant that the thread, viewed from the end of the bolt, does not have a circular outer circumference. The outer circumference may be oval. The thread of the deformation portion may have a local deformation at a thread crest or a thread root. The deformation may have been made with a pointed object that has been struck against the thread crest or thread root. The thread of the deformation portion may have a different pitch to that of the cylindrical portion.

The internal diameter of the safety device may be larger than the diameter of the cylindrical portion. It is thereby easy to move the safety device over the cylindrical portion before the nut is screwed onto the bolt.

Between the transverse bolt head and the cylindrical portion, the bolt may be formed with a non-circular portion which, at its largest thickness, is larger than the width of the slot. When the transverse bolt head has been moved through the slot, the non-circular portion is at least partially within the slot. By the very fact of the largest thickness of the non-circular portion being larger than the width of the slot, the bolt can only be rotated over a limited angle in the slot. The non-circular portion may be oval.

The non-circular portion may have a smaller cross-sectional area than the cylindrical portion. The bolt is thereby prevented from falling all the way through the slot.

The bolt may be provided with an internal thread which is well suited for attaching adjacent equipment to the bolt.

The bolt may be selected from a group comprising a T-bolt and an L-bolt.

In a first aspect, the invention relates more specifically to a method for releasing a bolt included by a compound bolt. The bolt has a first end portion, a second end portion and a longitudinal axis and is provided with a transverse bolt head at its second end portion. The compound bolt includes the bolt, a nut and a safety device arranged between the transverse bolt head and the nut, the safety device being provided, on the side facing the bolt head, with at least one locking body projecting axially. Also, the bolt includes a cylindrical portion, at its first end portion, with an external thread for the nut with a complementary internal thread. The transverse bolt head is arranged to be moved through a slot in an object from the front of the object and then be rotated around the longitudinal axis until the bolt head engages with the object at the back of the object. The locking body projects, in an active position, through the slot and out at the back of the object so that the transverse bolt head is prevented from rotating out of its engagement. The thread (12) of the first end portion (21) of the bolt (2) is provided with a deformation portion (5) so that the internal thread (42) of the nut (4) is non-complementary to the thread (12) of the deformation portion (5). The bolt is fitted by:
- moving the transverse bolt head through an elongated slot in an object;
- rotating the bolt around its longitudinal axis until the transverse bolt head is in engagement with the object;
- moving the safety device which is provided with at least one locking body until the locking body projects through the slot and out at the back of the object so that the transverse bolt head is prevented from rotating out of its engagement; and
- tightening the nut against the safety device,
and wherein the bolt is released by loosening the nut from the safety device, and moving the nut along the thread towards the first end portion, and by the method further including:
- moving the nut onto the deformation portion; and
- rotating the nut and the bolt simultaneously so that the transverse bolt head can be moved out of the slot.

The method may further include selecting the bolt from a group comprising a T-bolt and an L-bolt.

During fitting, after the T-portion has been slid through the slot, the nut is turned. The T-portion will then first be rotated into its engaged position, in which it, because of the design of the non-circular portion, cannot be rotated any further. By the very fact of the T-portion no longer preventing the locking bodies, which are also in the slot, from being movable through the slot, the safety device will be moved into its locking position when the nut is being tightened. After the tightening of the nut, the T-bolt is secured against rotating out of its engagement in the object.

Optionally, the thread of the deformation portion has a non-circular geometry.

Optionally, the thread of the deformation portion has a local deformation in a thread crest or a thread root.

Optionally, the internal diameter of the safety device is larger than the diameter of the cylindrical portion.

Optionally, the bolt is provided with an internal thread at its free end portion.

In what follows, examples of preferred embodiments and methods are described, which are visualized in the accompanying drawings, in which:
- Figure 1: shows a side view of a T-bolt which is provided with a nut and a safety device according to the invention;
- Figure 2: shows the view I-I of figure 1;
- Figure 3: shows the T-bolt fitted in an object;
- Figure 4: shows the view III-III of figure 3;
- Figure 5: shows the T-bolt partially in section;
- Figure 6: shows a plan view of the T-bolt;
- Figure 7: shows a section V-V of figure 5;
- Figure 8: shows a side view of the safety device;
- Figure 9: shows a plan view of the safety device;
- Figure 10: shows the view IX-IX of figure 9;
- Figure 11: shows a plan view in which the T-bolt, which is shown in the section V-V of figure 5, has been rotated into engagement with the object; and
- Figure 12: shows, on the same scale as figure 3, an alternative design of the T-bolt and the safety device for securing an element to a mounting plate.

In the drawings, a T-bolt is shown. The invention is not restricted to a bolt with a T-head. The invention also includes an L-bolt and the person skilled in the art will know how the exemplary embodiments shown can be adapted for a bolt with an L-head. The invention is not restricted to a T-bolt or an L-bolt and bolts with heads of other designs either, and the person skilled in the art will know how the exemplary embodiments shown can be adapted for a bolt with a head of a different design. In the description of the drawings, the term bolt is used.

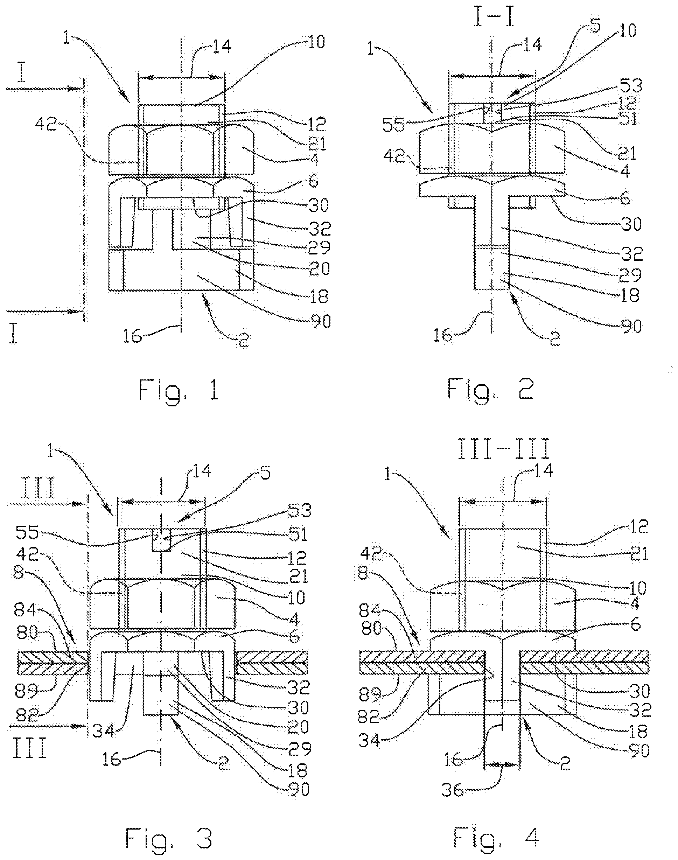

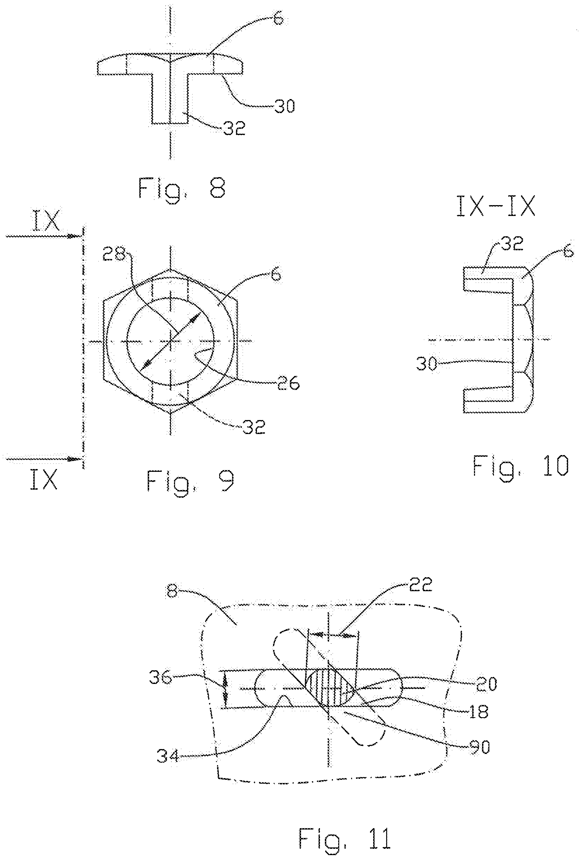

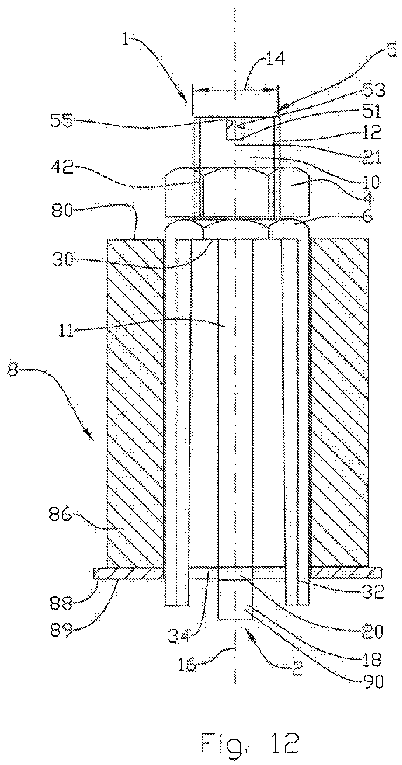

In the drawings, the reference numeral 1 indicates a compound bolt which includes a bolt 2 with a first end portion 21 and a second end portion 29, a nut 4 and a safety device 6. In figures 1 and 2, the compound bolt 1 is shown in a prepared position, whereas the compound bolt 1 of figures 3 and 4 is shown in the fitted position in an object 8. Here, the object 8 consists of a first thin sheet 82 which is compressed against a second thin sheet 84 by means of the compound bolt 1. The compound bolt 1 according to the invention may also be used for purposes other than clamping together two thin sheets 82, 84. The compound bolt 1 may be used to mount an element 86 to a mounting plate 88 as shown in figure 12. The bolt 2 may be passed through an elongated slot 34 extending through each of the thin sheets 82, 84 so that both thin sheets 82, 84 are positioned between the safety device 6 and the nut 4. The mounting plate 88 may be provided with one or a plurality of elongated slots 34, see figure 11, for the attachment of one or more elements 86 to the mounting plate 88. Such mounting plates 88 are known in the art and are not described any further.

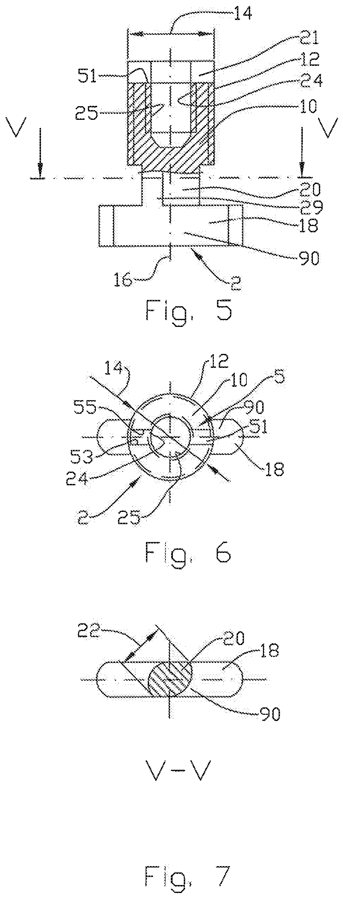

The bolt 2 is shown in more detail in figures 5 to 7. In figure 5, a side view is shown partially in section. The bolt 2 includes a cylindrical portion 10 which has an external thread 12 which is complementary to an internal thread 42 of the nut 4. The cylindrical portion 10 has an external diameter 14 and a longitudinal axis 16. At its opposite end portion, the bolt 2 is provided with a bolt head 90 in the form of a T-portion 18 which is perpendicular relative to the longitudinal axis 16.

Between the cylindrical portion 10 and the T-portion 18, the bolt 2 is shown provided with a portion 20, see figure 7. The portion 20 is shown as a non-circular portion 20 with a largest diameter 22. The bolt 2 may also be provided with a shank 11 between the portion 20 and the cylindrical portion 10, see figure 12.

In the embodiment that is shown in figure 5, the cylindrical portion 10 is shown with a cavity 25 with an internal centric thread 24. In another embodiment, not shown, the cylindrical portion 10 is not provided with a cavity 25.

The safety device 6 is shown in detail in figures 8 to 10. The safety device 6 has been given a centric bore 26 extending through it, with an internal diameter 28 which is larger than the external diameter 14 of the cylindrical portion 10. In another embodiment not shown, the centric bore 26 may be provided with internal threads complementarily fitting the external threads 12 of the bolt. In one embodiment, the bore 26 may, in the position of application, surround the portion 20 of the bolt 2. To secure the bolt 2, the safety device 6 of this embodiment may be rotated freely around the portion 20.

The safety device 6 which has an abutment surface 30 against the object 8 is shown with two locking bodies 32 projecting in the axial direction. In an alternative embodiment, not shown, the safety device 6 may be provided with one projecting locking body 32.

The T-portion 18 of the compound bolt 1 and at least a portion of the non-circular portion 20 may be inserted into and through the elongated slot 34 in the object 8 from the front 80 of the object 8. This is shown best in figure 11 in which the bolt 2 has been rotated so that the T-portion 18 is in an engagement position at the back 89 of the object 8. Rotation around the longitudinal axis 16 is restricted by the largest diameter 22 of the non-circular portion 20 being larger than the width 36 of the slot 34.

When the T-portion 18 is in its engaged position, the safety device 6 is rotated around the longitudinal axis 16 until the locking bodies 32 can be moved in through the slot 34 until the abutment surface 30 hits the front 80 of the object 8. In this position, the locking bodies 32 project somewhat from the slot 34 at the back 89 of the object 8. This prevents the T-portion 18 from being rotated back to the slot 34. The nut 4 is tightened, clamping the safety device 6 against the front 80 of the object 8 and the T-portion 18 against the back 89 of the object 8. This is shown best in figures 3, 4 and 12.

In an alternative method, the safety device 6 is rotated in such a way that the locking bodies 32 are resting on the T-portion 18 before the compound bolt 1 is inserted into the elongated slot 34 as is shown in figures 1 and 2. When the abutment surface 30 hits the front 80 of the object 8, the bolt 2 is rotated around its longitudinal axis 16. The T-portion 18 is moved out of the way from the locking bodies 32 and the bolt can be pulled back somewhat in the direction of the front 80 of the object 8 before the nut 4 is tightened. According to this method, it is possible to attach an element 86 to the object 8 by using only one hand.

Release of the compound bolt 1 is carried out in the reverse order.

In a deformation portion 5, the thread 12 of the first end portion 21 is formed with a geometry deviating from the geometry of the thread 12 in the cylindrical portion 10. The deviating geometry may be a deviation from the circular shape viewed from the end of the bolt 2, for example a non-circular shape, such as an oval shape. In the figures, a slot 51 is shown in the first end portion 21 of the bolt 2. The slot 51 has a first side wall 53 and a second side wall 55. The slot 51 may have been formed before the nut 4 is screwed onto the thread 12. Then the side walls 53, 44 of the slot are forced apart somewhat so that the thread 12 of the deformation portion 5 gets an oval shape. In the embodiment in which the bolt 2 is provided with a cavity 25 in its first end portion 21 (figures 5 and 6), the first end portion 21 may be compressed to get an oval shape of the thread 12 in the deformation portion 5. The thread 12 may also be formed with a different pitch in the deformation portion 5 to that of the cylindrical portion 10. The thread 12 may also be deformed locally in the first portion 21, for example by a stroke with a pointed tool against a thread crest or a thread root to form the deformation portion 5. This gives the thread 12 a deviating local geometry.

The thread 12 may be given the deformation portion 5 after the nut 4 has been screwed onto the thread 12. The nut 4 may thereby be screwed onto the thread 12 in the usual way. The deformation portion 5 will lead to the necessary torque for moving the nut 4 towards the first end portion 21 increasing when the internal threads (not shown) of the nut 4 are being moved onto the deformation portion 5. The screw 4 is rotated in the usual way around the longitudinal axis 16 when the nut 4 is loosened from the front 80 of the object 8. The loose nut 4 may then be screwed manually in the usual way until the nut 4 reaches the deformation portion 5. Then the torque on the nut 4 is increased, and the bolt 2 will rotate together with the nut 4. It is thereby achieved that the T-head 18 can be moved in a controlled manner out of the elongated slot 34 of the mounting plate 88. The slot 51 may advantageously have the same longitudinal direction as the T-head 18 in order thereby to indicate the orientation of the T-head 18 as is shown in figures 2, 4, 6 and 12. In the first end portion 21, the bolt 2 may be provided with a marking indicating the orientation of the T-head 18.

The deformation portion 5 may be arranged in such a way that the nut 4 may be screwed off and onto the first end portion 21 by increasing the torque applied to the nut 4, but without damaging the internal thread 42 of the nut 4. In an alternative embodiment, the deformation portion 5 may be arranged in such a way that the nut 4 cannot be unscrewed from the first end portion 21 without damaging the internal thread 42 of the nut 4.

The invention is not restricted to the portion 20 having a non-circular shape. The portion 20 may also be circular (not shown) with a diameter which is equal to or smaller than the width 36 of the slot 34.

As mentioned, the invention is not restricted to bolts with a T-portion 18. Bolts with L-shaped bolt heads 90 can also be secured to an object 8 in the same way. A compound L-bolt may be provided with a corresponding nut 4, safety device 6, cylindrical portion 10 with external threads 12 and a portion 20 as described in the foregoing for the compound bolt 1. The rotation around the longitudinal axis of the L-bolt is restricted by the two locking bodies 32 of the safety device 6. In an alternative embodiment, the safety body 6 may be provided with one locking body 32 and the portion 20 may consist of a non-circular portion. The rotation of the L-bolt in one rotational direction is restricted by the largest diameter 22 of the non-circular portion 20 being larger than the width 36 of the slot 34. In the other rotational direction, the rotation of the L-bolt is restricted by the bolt head of the L-bolt hitting the locking body 32.

The invention is not restricted to bolts with T-shaped bolt heads 90 or L-shaped bolt heads 90, either. A mounting plate 88 may be provided with slots of different designs from elongated slots 34. Examples of such slots may be through, cross-shaped slots or openings, openings shaped like a triangle or like a square (not shown). The bolt 2 may correspondingly be provided with a cross-shaped head, a triangular head and a square head (not shown). The safety device 6 may be provided with one, two, three or four locking bodies 32 when the bolt head is cross-shaped or square-shaped, or with one, two or three locking bodies 32 when the bolt head is cross-shaped or triangular. The slot or opening in the mounting plate 88 may also be given other designs, the bolt head may be given corresponding designs and the safety device 6 may be adapted accordingly within the scope of the invention. For example, the opening may be circular (not shown) and the bolt head may be a T-shaped bolt head 90, wherein, in the second direction, the bolt head 90 is longer than the diameter of the opening. The locking body 32 may be formed with a circular outer edge so that the locking body together with the bolt head 90 fills the opening.

The cavity 25 with the internal thread 24, as shown in figures 5 and 6, may be used to attach adjacent equipment to the first end portion 21 of the bolt 2.

It should be noted that all the above-mentioned embodiments illustrate the invention, but do not limit it, and persons skilled in the art may construct many alternative embodiments without departing from the scope of the invention as defined in the appended claims. In the claims, reference numbers in brackets are not to be regarded as restrictive. The use of the verb "to comprise" and its different forms does not exclude the presence of elements or steps that are not mentioned in the claims. The indefinite article "a" or "an" before an element does not exclude the presence of several such elements. The fact that some features are indicated in mutually different dependent claims does not indicate that a combination of these features cannot be used with advantage.

## Claims

1. A method for releasing a bolt (2) included in by a compound bolt (1),
wherein the bolt (2) has a first end portion (21), a second end portion (29) and a longitudinal axis (16) and is provided with a transverse bolt head (90) at its second end portion (29),
wherein the compound bolt (1) includes the bolt (2), a nut (4) and a safety device (6) arranged between the transverse bolt head (90) and the nut (4), the safety device (6) being provided, on the side facing the bolt head (90), with at least one locking body (32) projecting axially,
wherein the bolt (2) includes a cylindrical portion (10), at its first end portion (21), with an external thread (12) for the nut (4) with a complementary internal thread (42),
wherein the transverse bolt head (90) is arranged to be moved through a slot (34) in an object (8) from the front (80) of the object (8) and then be rotated around the longitudinal axis (16) until the bolt head (90) engages with the object (8) at the back (89) of the object (8),
wherein the locking body (32) projects, in an active position, through the slot (34) and out at the back (89) of the object (8) so that the transverse bolt head (90) is prevented from rotating out of its engagement, wherein the thread (12) of the first end portion (21) of the bolt (2) is provided with a deformation portion (5) so that the internal thread (42) of the nut (4) is non-complementary to the thread (12) of the deformation portion (5), and
wherein the bolt (2) is fitted by:
- moving the transverse bolt head (90) through a slot (34) in an object (8);
- rotating the bolt (2) around the longitudinal axis (16) until the transverse bolt head (90) is in engagement with the object (8);
- moving the safety device (6) which is provided with at least one locking body (32) until the locking body (32) projects through the slot (34) and out at the back (89) of the object (8) so that the transverse bolt head (90) is prevented from rotating out of its engagement; and
- tightening the nut (4) against the safety device (6),
and wherein the bolt (2) is released by loosening the nut (4) from the safety device (6); and
moving the nut (4) along the thread (12) towards the first end portion (21), **characterized in that** the method further includes:
- moving the nut (4) onto the deformation portion (5); and
- rotating the nut (4) and the bolt (2) at the same time so that the transverse bolt head (90) can be moved out of the slot (34).

2. The method according to claim 1, wherein the method further includes selecting the bolt (2) from a group comprising a T-bolt and an L-bolt.

3. The method according to any of the claims 1 to 2, wherein the thread (12) of the deformation portion (5) has a non-circular geometry.

4. The method according to any of the claims 1 to 2, wherein the thread (12) of the deformation portion (5) has a local deformation in a thread crest or a thread root.

5. The method according to any of the claims 1 to 4, wherein the internal diameter (28) of the safety device (6) is larger than the diameter (14) of the cylindrical portion (10).

6. The method according to any of the claims 1 to 5, wherein the bolt (2) is provided with an internal thread (24) at its free end portion.

## Patentansprüche

1. Verfahren zum Lösen einer Schraube (2), welche ein Teil einer Schraubverbindung (1) ist, wobei die Schraube (2) einen ersten Endabschnitt (21), einen zweiten Endabschnitt (29) und eine Längsachse (16) aufweist, und an seinem zweiten Endabschnitt (29) einen transversalen Schraubenkopf (90) aufweist,
wobei die Schraubverbindung (1) die Schraube (2), eine Mutter (4) und eine Sicherheitsvorrichtung (6) aufweist, welche zwischen dem transversalen Schraubenkopf (90) und der Mutter (4) angeordnet ist, wobei die Sicherheitsvorrichtung (6) auf derjenigen Seite angeordnet ist, welche dem Schraubenkopf (90) zugewandt ist, und mindestens einen in axialer Richtung abstehenden Verriegelungskörper (32) aufweist,
wobei die Schraube (2) an ihrem ersten Endabschnitt (21) einen zylindrischen Abschnitt (10) mit einem Aussengewinde (12) für die ein komplementäres Innengewinde (42) aufweisende Mutter (4) aufweist, wobei der transversale Schraubenkopf (90) ausgebildet ist, um von der Vorderseite (80) eines Gegenstands (8) her durch einen Schlitz (34) in dem Gegenstand (8) hindurch geführt zu werden, und dann um die Längsachse (16) herum gedreht zu werden, bis der Schraubenkopf (90) an der Rückseite (89) des Gegenstands (8) mit dem Gegenstand (8) in Eingriff gelangt,
wobei der Verriegelungskörper (32) in einer aktiven Stellung durch den Schlitz (34) hindurchragt und an der Rückseite (89) des Gegenstands (8) hinausragt, sodass der transversale Schraubenkopf (90) daran gehindert ist, aus seinem Eingriff hinauszudrehen,
wobei das Gewinde (12) des ersten Endabschnittes (21) der Schraube (2) mit einem Umformungsabschnitt (5) versehen ist, sodass das Innengewinde (42) der Mutter (4) nicht komplementär zum Gewinde (12) des Umformungsabschnittes (5) ist, und
wobei die Schraube (2) angepasst wird durch:
- Hindurchbewegen des transversalen Schraubenkopfes (90) durch einen Schlitz (34) in einem Gegenstand (8);
- Drehen der Schraube (2) um die Längsachse (16), bis der transversale Schraubenkopf (90) im Eingriff mit dem Gegenstand (8) steht;
- Bewegen der Sicherheitsvorrichtung (6), welche mit mindestens einem Verriegelungskörper (32) ausgebildet ist, bis der Verriegelungskörper (32) durch den Schlitz (34) hindurchragt und an der Rückseite (89) des Gegenstands (8) hinausragt, sodass der transversale Schraubenkopf (90) daran gehindert wird, aus seinem Eingriff herauszudrehen; und
- Anziehen der Mutter (4) gegen die Sicherheitsvorrichtung (6), und wobei die Schraube (2) gelöst wird, indem die Mutter von der Sicherheitsvorrichtung (6) gelöst wird und die Mutter (4) entlang des Gewindes (12) in Richtung des ersten Endabschnittes (21) bewegt wird,
**dadurch gekennzeichnet, dass** das Verfahren ferner beinhaltet:
- Bewegen der Mutter (4) auf den Umformungsabschnitt (5); und
- gleichzeitiges Rotieren der Mutter (4) und der Schraube (2), sodass der transversale Schraubenkopf (90) aus dem Schlitz (34) heraus bewegt werden kann.

2. Verfahren gemäss Anspruch 1, wobei das Verfahren ferner beinhaltet, die Schraube (2) aus einer Gruppe auszuwählen, welche eine T-Schraube und eine L-Schraube beinhaltet.

3. Verfahren gemäss einem der vorhergehenden Ansprüche 1 bis 2, wobei das Gewinde (12) des Umformungsabschnittes (5) eine nicht-kreisrunde Geometrie aufweist.

4. Verfahren gemäss einem der Ansprüche 1 bis 2, wobei das Gewinde (12) des Umformungsabschnittes (5) eine lokale Umformung in einer Gewindespitze oder in einem Gewindekern aufweist.

5. Verfahren gemäss einem der Ansprüche 1 bis 4, wobei der Innendurchmesser (28) der Sicherheitsvorrichtung (6) grösser ist als der Durchmesser (14) des zylindrischen Abschnitts (10).

6. Verfahren gemäss einem der Ansprüche 1 bis 5, wobei die Schraube (2) an ihrem freien Endabschnitt ein Innengewinde (24) aufweist.

## Revendications

1. Un procédé pour libérer un boulon (2) compris dans un boulon composé (1),
dans lequel le boulon (2) comporte une première partie d'extrémité (21), une deuxième partie d'extrémité (29) et un axe longitudinal (16) et est pourvu d'une tête de boulon transversale (90) au niveau de sa deuxième partie d'extrémité (29),
dans lequel le boulon composé (1) comprend le boulon (2), un écrou (4) ainsi qu'un dispositif de sécurité (6) disposé entre la tête de boulon transversale (90) et l'écrou (4), le dispositif de sécurité (6) étant muni, du côté tourné vers la tête de boulon (90), d'au moins un corps de verrouillage (32) en saillie axiale,
dans lequel le boulon (2) comprend une partie cylindrique (10), au niveau de sa première partie d'extrémité (21), avec un filetage externe (12) pour l'écrou (4) avec un filetage interne complémentaire (42) ;
dans lequel la tête de boulon transversale (90) est disposée pour être déplacée à travers une fente (34) dans un objet (8) depuis l'avant (80) de l'objet (8), puis pour être tournée autour de l'axe longitudinal (16) jusqu'à ce que la tête de boulon (90) s'engage avec l'objet (8) à l'arrière (89) de l'objet (8) ;
dans lequel le corps de verrouillage (32) fait saillie, dans une position active, à travers la fente (34) et vers l'extérieur à l'arrière (89) de l'objet (8) de sorte que la tête de boulon transversale (90) soit empêchée de tourner hors de son engagement,
dans lequel le filetage (12) de la première partie d'extrémité (21) du boulon (2) est pourvu d'une partie de déformation (5) de sorte que le filetage interne (42) de l'écrou (4) est non complémentaire au filetage (12) de la partie de déformation (5), et
dans lequel le boulon (2) est monté par:
- déplacer la tête de boulon transversale (90) à travers une fente (34) dans un objet (8) ;
- faire tourner le boulon (2) autour de l'axe longitudinal (16) jusqu'à ce que la tête de boulon transversale (90) soit en prise avec l'objet (8) ;
- déplacer le dispositif de sécurité (6) qui est pourvu d'au moins un corps de verrouillage (32) jusqu'à ce que le corps de verrouillage (32) projette à travers la fente (34) et ressorte à l'arrière (89) de l'objet (8) de sorte que la tête de boulon transversale (90) est empêchée de tourner hors de son engagement ; et
- serrage de l'écrou (4) contre le dispositif de sécurité (6),
et dans lequel le boulon (2) est libéré en desserrant l'écrou (4) du dispositif de sécurité (6) ; et
déplacer l'écrou (4) le long du filetage (12) vers la première partie d'extrémité (21),
**caractérisé en ce que** le procédé comprend en outre :
- déplacer l'écrou (4) sur la partie de déformation (5) ; et
- faire tourner l'écrou (4) et le boulon (2) en même temps pour que la tête transversale du boulon (90) puisse être sortie de la fente (34).

2. Le procédé selon la revendication 1, dans lequel le procédé comprend en outre la sélection du boulon (2) dans un groupe comprenant un boulon en T et un boulon en L.

3. Le procédé selon l'une quelconque des revendications 1 ou 2, dans lequel le filetage (12) de la partie de déformation (5) a une géométrie non-circulaire.

4. Le procédé selon l'une quelconque des revendications 1 ou 2, dans lequel le filetage (12) de la partie de déformation (5) présente une déformation locale dans une crête de filetage ou une racine de filetage.

5. Le procédé selon l'une quelconque des revendications 1 à 4, dans lequel diamètre interne (28) du dispositif de sécurité (6) est plus grand que le diamètre (14) de la partie cylindrique (10).

6. Le procédé selon l'une quelconque des revendications 1 à 5, dans lequel le boulon (2) est pourvu d'un filetage interne (24) au niveau de sa partie d'extrémité libre.
